Europäisches Patentamt

European Patent Office

Office européen des brevets

(19)

(11) Veröffentlichungsnummer: **0 227 599**
**B1**

(12) **EUROPÄISCHE PATENTSCHRIFT**

(45) Veröffentlichungstag der Patentschrift:
11.04.90

(51) Int. Cl.⁴: **B65G 15/14, B08B 9/30**

(21) Anmeldenummer: **86810583.4**

(22) Anmeldetag: **11.12.86**

(54) Vorrichtung zum Fördern von Gegenständen, insbesondere Flaschen.

(30) Priorität: **20.12.85 CH 5464/85**

(43) Veröffentlichungstag der Anmeldung:
**01.07.87 Patentblatt 87/27**

(45) Bekanntmachung des Hinweises auf die Patenterteilung:
**11.04.90 Patentblatt 90/15**

(84) Benannte Vertragsstaaten:
**BE CH DE FR GB LI NL SE**

(56) Entgegenhaltungen:
**WO-A-81/02567**
**DE-A- 3 151 997**
**DE-C- 468 795**
**FR-A- 2 417 469**
**US-A- 2 381 436**
**US-A- 3 556 847**
**US-A- 4 354 590**

(73) Patentinhaber: **Mathias Streiff AG, Tschachen,
CH-8762 Schwanden(CH)**
Patentinhaber: **Standard Knapp AG, General
Wille-Strasse 201, CH-8706 Feldmeilen(CH)**

(72) Erfinder: **Eppenberger, Christian, im Daumberg 3461,
CH-8606 Werrikon(CH)**
Erfinder: **Schnyder, Peter, Ennetbach 3,
CH-8754 Netstal(CH)**

(74) Vertreter: **Wenger, René et al, Hepp & Partner AG
Marktgasse 18, CH-9500 Wil(CH)**

ACTORUM AG

## Beschreibung

Die Erfindung betrifft eine Vorrichtung zum Fördern von Gegenständen gemäss dem Oberbegriff von Anspruch I.

Derartige Vorrichtungen werden u.a. für das Ueberkopfbehandeln von Flaschen eingesetzt, wobei mittels Düsen eine Flüssigkeit in die Flaschenöffnungen eingespritzt wird und die Flaschen anschliessend mit der Oeffnung nach unten eine Abtropfstrecke passieren.

Eine gattungsmässig vergleichbare Vorrichtung ist durch die US-A-3,556,847 bekannt geworden. Dabei werden die Flaschen durch die parallel geführten Bandketten klemmend erfasst und durchlaufen mehrere nebeneinander liegende Achterbahnen. An den Bahnkrümmungen sind Spritzräder angeordnet, welche Spülflüssigkeit in die Flaschenöffnungen einspritzen. An den Bandketten sind Mitnehmerelemente angeordnet, welche die Flaschen zwischen den Bandketten positionieren. Da die zum Vereinzeln eingesetzte Schnecke zwangsläufig nicht bis in den Einzugsbereich der beiden Bandketten geführt werden kann, müssen die vereinzelten Behälter irgendwie von der Schnecke abgenommen und dem Einzugsbereich zugeführt werden. Gemäss Vorpublikation erfolgt dies dadurch, dass eine der beiden Bandketten bis in den Bereich der Schnecke vorgezogen wird und dort die Flaschen mit Hilfe der Mitnehmerelemente von der Schnecke abnimmt und in den Einzugsbereich einschiebt.

Ein Nachteil dieser Konstruktion besteht darin, daß die Vorrichtung nur für einen ganz bestimmten Flaschendurchmesser gebraucht werden kann. Außerdem müssen die bereits vereinzelten Flaschen über eine kurze Zwischenstrecke an einer Führungsschiene entlang gleiten, bis sie den eigentlichen Einzugsbereich erreichen. Dabei besteht die Gefahr, daß sich die Flaschen infolge der Reibung drehen und daß dabei die Oberfläche zerkratzt wird. Auch eine präzise Einstellung der Distanz zwischen zwei Flaschen ist mit einer Vorrichtung gemäß Vorpublikation nicht möglich.

Es ist daher Aufgabe der Erfindung, eine Vorrichtung der eingangs genannten Art zu schaffen, mit der die Flaschen auf schonende Weise in den Einzugsbereich der Bandketten eingetaktet werden können. Die Vorrichtung soll sich außerdem an verschiedene Flaschendimensionen anpassen lassen. Schließlich sollen die Bandketten nicht unnötig mit Reibungskräften belastet werden und möglichst widerstandslos und damit präzise antreibbar sein. Schließlich sollen die Gegenstände auch mit einer relativen Distanz zueinander eingetaktet werden, welche justierbar ist.

Diese Aufgabe wird erfindungsgemäß mit einer Vorrichtung gelöst, welche die Merkmale des Anspruchs 1 aufweist. Die Eintaktkette nimmt mit ihren Führungsfingern die einzelnen Gegenstände von der Schnecke ab und führt sie dem Einzugsbereich der Transportketten zu. Dabei müssen die Gegenstände weder gegen die Schnecke noch gegen irgendeine Führungswand gepreßt werden. Das Eintakten erfolgt somit für die Gegenstände schonend, geräuscharm und auf äußerst präzise Weise. Innerhalb eines bestimmten Bereiches können Gegenstände mit verschiedenen Abmessungen verarbeitert werden, ohne daß Umstellarbeiten erforderlich wären. Gegebenenfalls kann eine andere Schnecke und eine andere Eintaktkette montiert werden, was jedoch mit einem verhältnismäßig geringen Aufwand möglich ist. An den Bandketten sind keinerlei Änderungen erforderlich.

Vorzugsweise sind die Bandkette, die Schnecke und die Eintaktkette mit der gleichen Antriebsvorrichtung synchron antreibbar, so dass keine asynchronen Bewegungen beim Eintakten der Flaschen im Einzugsbereich der Bandketten auftreten können. Die Reibungskräfte an den Bandketten können weiter dadurch gesenkt werden, das diese für die Ueberkopfführung der Gegenstände auf Drehkranzpaaren umgelenkt werden, wobei der eine Drehkranz den den Transportkanal bildenden Abschnitt und der andere Drehkranz den rücklaufenden Abschnitt der Bandkette trägt. Durch die damit erreichte Reduktion der Reibungskräfte wird ein Verziehen der Ketten verhindert, was die Lebensdauer der Ketten erhöht.

Ein besonders wassersparendes Ausspritzen von Flaschen wird dadurch erreicht, dass die Ausspritzvorrichtung ein Düsenrad ist, an dessen Umfang in regelmässiger Teilung Düsen angeordnet sind und welches synchron oder asynchron zu den Bandketten antreibbar ist. Da die Behälter in genau definierten Abständen die Umlenkvorrichtung passieren, können die Düsen des Düsenrades präzise gleichachsig auf die Behälteröffnungen gerichtet werden, so dass das gesamte ausgespritzte Wasser in die Behälter eindringt. Die erfindungsgemässe Eintaktkette erlaubt dabei ein Justieren im Betrieb, bis die Düsen genau auf die Behälteröffnungen gerichtet sind. Wo grosse Wassermengen vorhanden sind, kann das Düsenrad jedoch auch asynchron antreibbar sein, so dass ein Teil des aus den Düsen ausgespritzten Wassers neben den Behälteröffnungen durchfliesst.

Weitere Vorteile der Erfindung ergeben sich aus den Patentansprüchen und aus der nachfolgenden Beschreibung. Mehrere Ausführungsbeispiele der Erfindung sind in den Zeichnungen dargestellt und werden nachstehend genauer beschrieben. Es zeigen:

Figur I eine Seitenansicht einer Ausspritzvorrichtung mit rotierendem Düsenrad,

Figur 2 einen Schnitt durch die Ebene A-A gemäss Figur I,

Figur 3 einen Schnitt durch die Ebene B-B gemäss Figur I,

Figur 4 eine etwas vergrösserte Darstellung der Eintaktkette in Seitenansicht,

Figur 5 eine etwas vergrösserte Darstellung der Eintaktkette in Draufsicht,

Figur 6 eine Seitenansicht einer Umlenkvorrichtung,

Figur 7 einen Schnitt durch die Ebene A-A gemäss Figur 6,

Figur 8 eine Draufsicht auf ein nur hälftig dargestelltes Spritzrad,

Figur 9 einen Querschnitt durch ein Spritzrad,

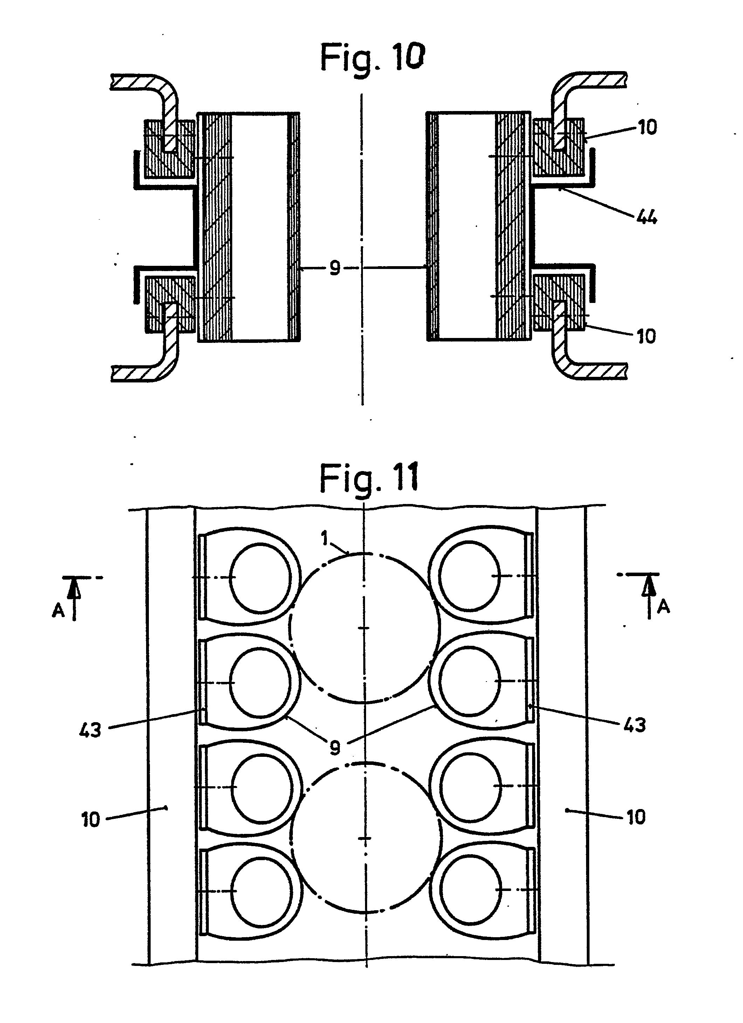

Figur 10 einen Schnitt durch zwei parallel laufende Bandketten durch die Ebene A-A gemäss Figur 11,
Figur 11 eine Draufsicht in Axialrichtung der Behälter auf einen Transportkanal, und
Figur 12 eine schematische Darstellung der Umlenkungen und Laufrichtungen der zwei parallel laufenden Bandketten.

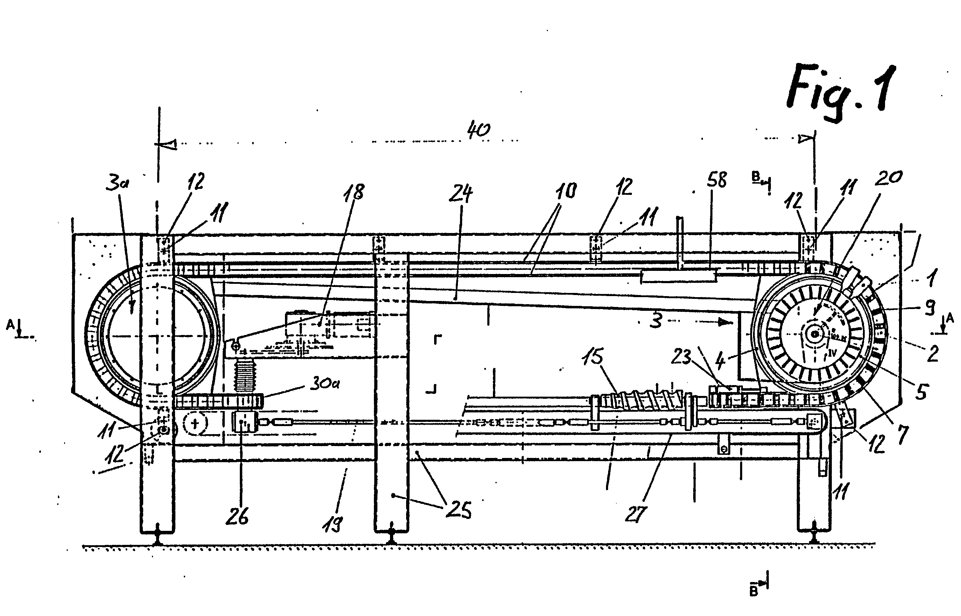

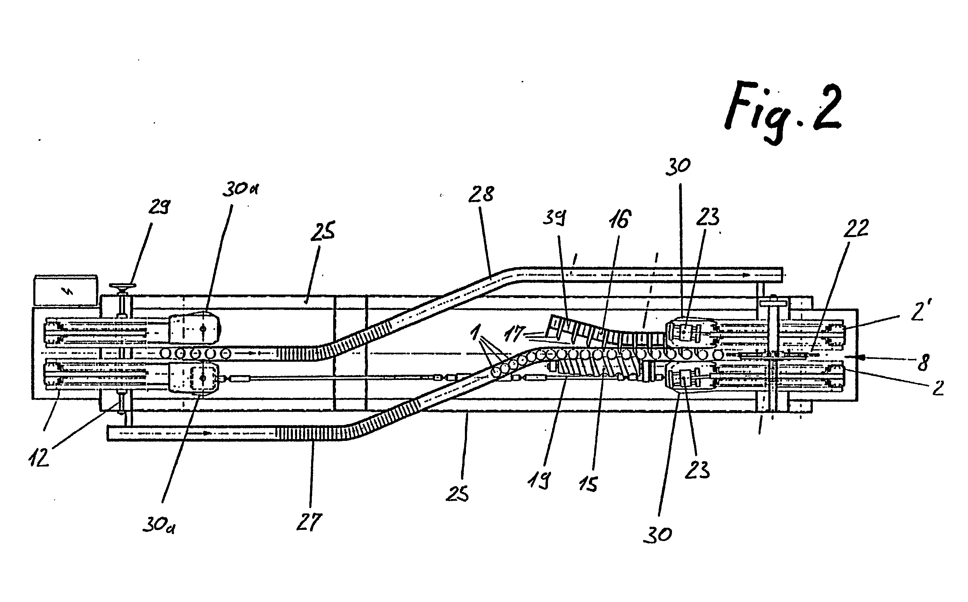

Wie in den Figuren 1 bis 3 dargestellt, ist die Vorrichtung auf einem Maschinenständer 25 angeordnet. Der Einfachheit halber werden die Gegenstände 1 nachstehend nur noch als Flaschen bezeichnet. Selbstverständlich können aber auf die genau gleiche Weise auch andere Gegenstände wie z.B. topfförmige Gläser, Hülsen, usw. transportiert und bearbeitet werden. Anstelle der Ausspritzvorrichtung könnte im Bereich der Umlenkung auch eine andere Bearbeitungsstation angeordnet sein. Die dargestellten Ausführungsbeispiele beziehen sich jedoch ausschliesslich auf Ausspritzvorrichtungen.

Die Flaschen 1 werden auf einem horizontalen Zuführband 27 in Reihe herangeführt. Auf dem Zuführband 27 stossen die einzelnen Flaschen unmittelbar aneinander. Das Zuführband ist vorzugsweise ebenfalls eine kurvengängige Plattenbandkette. Gegebenenfalls können auf beiden Seiten des Zuführbandes Stützschienen angeordnet sein, um die aufrecht stehenden Flaschen 1 während des Transports zu stützen.

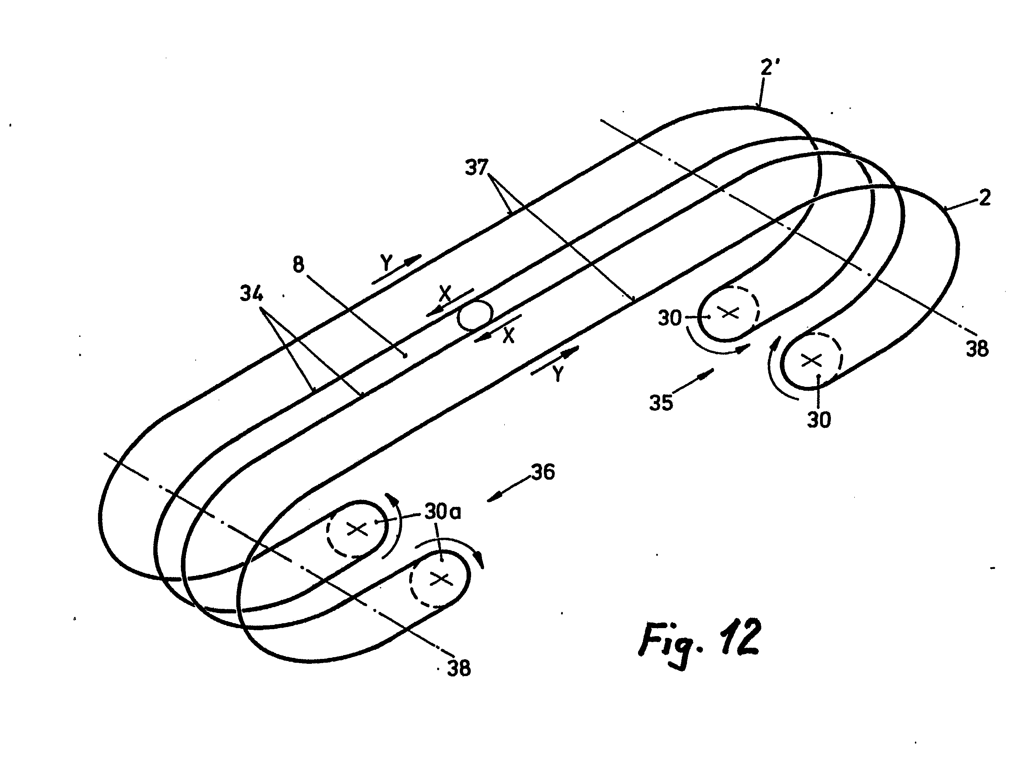

Der Transportkanal 8, in dem die Flaschen klemmend festgehalten und transportiert werden, wird durch zwei parallel laufende, endlose Bandketten 2 und 2' gebildet. Die endlose Schlaufe einer einzelnen Bandkette 2 wird einerseits über die beiden Umlenkvorrichtungen 3 und 3a geführt und andererseits durch die beiden Umlenkritzel 30 und 30a umgelenkt. Der relative Verlauf zweier benachbarter Schlaufen ist am besten aus Figur 12 ersichtlich. Die gleichsinnig und parallel laufenden Abschnitte 34 der beiden Bandketten 2 und 2' bilden den Transportkanal 8 mit seinem Einzugsbereich 35 und seinem Ausstossbereich 36. Die Laufrichtung der Abschnitte 34 ist mit Pfeilrichtung X angedeutet. Nach dem Passieren der Umlenkritzel 30a führen die zurücklaufenden Abschnitte 37 in Pfeilrichtung Y wieder zurück zu den Umlenkritzeln 30, um erneut den Transportkanal zu bilden. Die horizontalen Umlenkachsen der Umlenkvorrichtungen sind mit dem Bezugszeichen 38 dargestellt.

Weitere Einzelheiten der Vorrichtung werden nun wiederum anhand der Figuren 1 bis 5 erläutert. Im Einzugsbereich 35 des Transportkanals 8 ist seitlich und parallel zum Zuführband 27 eine rotierende Schnecke 15 angeordnet. Die Schnecke ist mit einer sich ändernden Steigung versehen, so dass die herangeführten Flaschen 1 vereinzelt und auf eine bestimmte Distanz zueinander gebracht werden können. Da die Flaschen 1 aus Platzgründen nicht mit der Schnecke bis an den Transportkanal 8 herangeführt werden können, werden die Flaschen mittels einer endlosen Eintaktkette 16 von der Schnecke 15 übernommen. Die Eintaktkette 16 weist einen zum Bahnverlauf der Flaschen 1 abgewinkelten Abschnitt 39 auf und ist mit einzelnen Führungsfingern 17 versehen. Diese Führungsfinger 17 greifen aus dem abgewinkelten Abschnitt 39 kommend allmählich zwischen die Flaschen ein und führen diese in genau definierten Abständen in den Transportkanal 8.

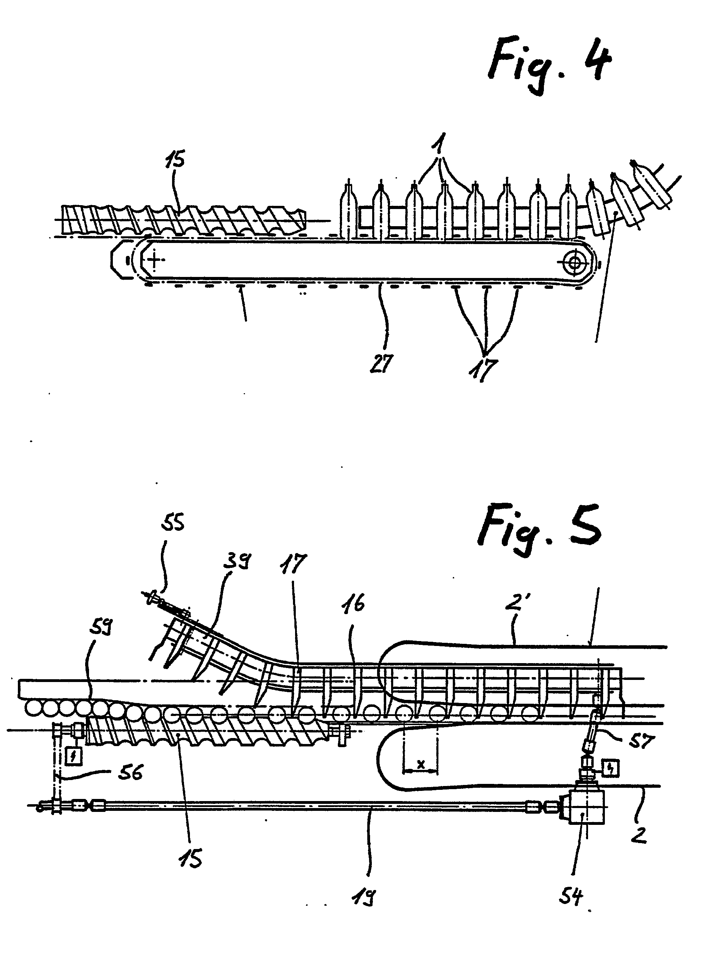

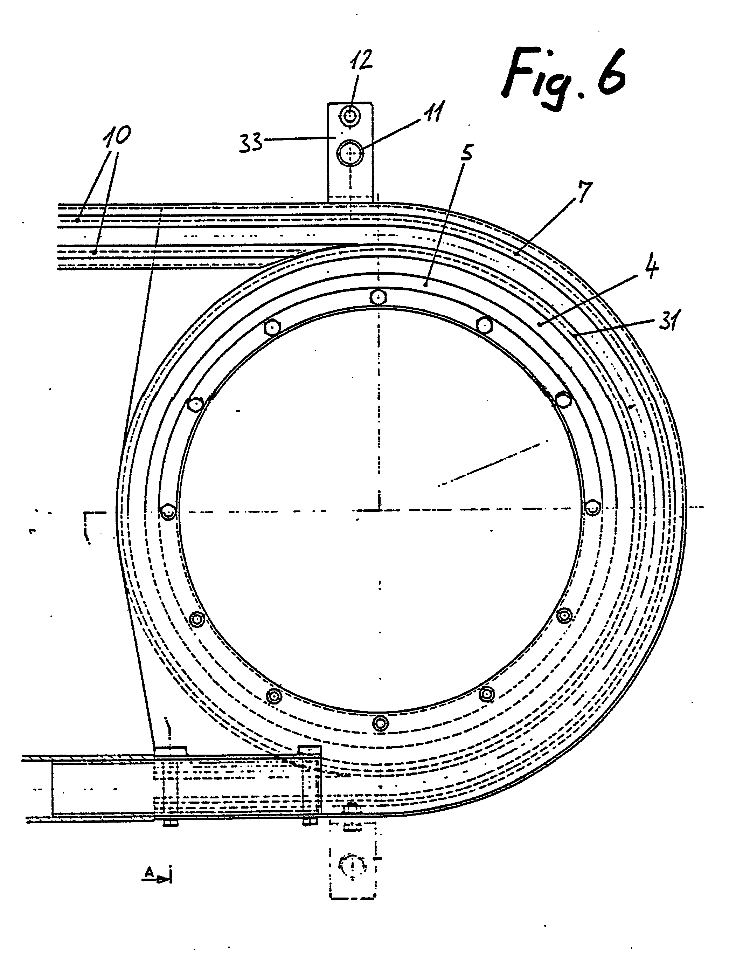

Die Schnecke 15 und die Eintaktkette 16 laufen absolut synchron, was dadurch gewährleistet wird, dass beide Einheiten über die gleiche Kardanwelle 19 angetrieben werden. Von der Kardanwelle 19 erfolgt der Antrieb der Schnecke über einen Transmissionsriemen 56, während die Eintaktkette 16 über ein Umlenkgetriebe 54 und eine kurze Kardanwelle 57 angetrieben wird. Gespannt wird die Eintaktkette mit Hilfe eines Kettenspanners 55. Im Bereich der Schnecke ist eine Führungskulisse 59 angeordnet, an der jedoch keine nennenswerten Reibungskräfte auftreten. Aus Figur 4 ist besonders deutlich sichtbar, wie die einzelnen Führungsfinger 17 an den Flaschen 1 unterhalb der Bandketten 2 und 2' angreifen. Das Zuführband 27 läuft etwas schneller als die Schnecke 15 bzw. die Eintaktkette 16, so dass die einzelnen Flaschen durch die Führungsfinger 17 abgebremst werden, was aus Figur 5 besonders deutlich sichtbar wird. Im unmittelbaren Einzugsbereich der beiden Bandketten 2 und 2' liegen die Flaschen 1 an den Führungsfingern 17 an.

Die mit Hilfe der elastischen Mitnehmerelemente 9 im Transportkanal eingeklemmten Flaschen 1 werden an der Umlenkvorrichtung 3 um 180° gewendet. Im Zentrum der Umlenkvorrichtung 3 ist eine Ausspritzvorrichtung 20 angeordnet, welche bei dem in den Figuren 1 bis 3 dargestellten Ausführungsbeispiel aus einem synchron mit den Flaschen mitrotierenden Düsenrad 22 besteht. Das Düsenrad spritzt mit seinen Düsen über einen bestimmten Sektor Wasser unter Druck genau in die Flaschenöffnungen, so dass das Flascheninnere ausgespült wird. Der gerade verlaufende Bereich des Transportkanals 8 bildet die Abtropfstrecke 40, auf der die Flaschen 1 mit ihrer Oeffnung nach unten gerichtet abtropfen können.

Zum schnelleren Entleeren der Behälter können entlang der Abtropfstrecke einseitig oder beidseitig Saugdüsen 58 angeordnet sein, mit denen im Mündungsbereich der Flaschen durch Venturi-Effekt ein Vakuum erzeugt wird. Es kann sich dabei um Einzeldüsen oder um längere Düsenschlitze handeln.

Nachdem die Flaschen nach dem Ende der Abtropfstrecke mittels der Umlenkvorrichtung 3a wiederum um 180° in ihre normale Lage gewendet werden, gelangen sie in den Ausstossbereich 36, wo sie von einem Auslaufband 28 übernommen und von der Vorrichtung weggeführt werden.

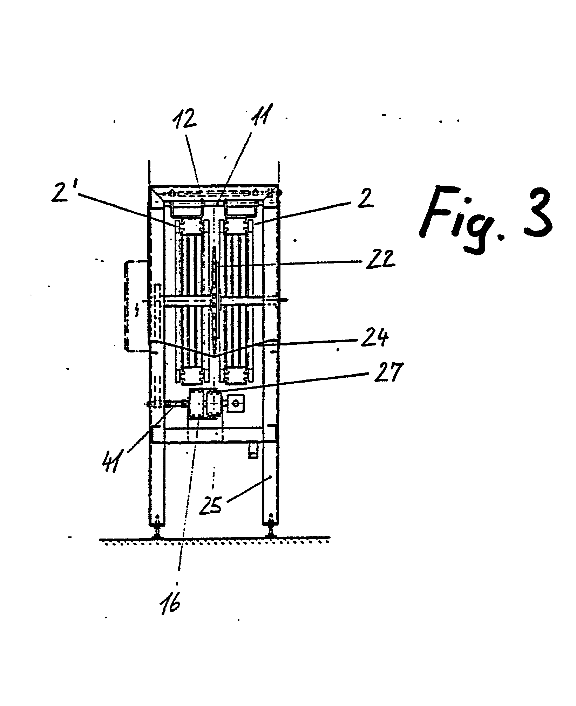

Die verschiedenen drehantreibbaren Elemente der Vorrichtung werden von einer zentralen Antriebsvorrichtung 18 angetrieben. Diese Antriebsvorrichtung treibt die beiden Umlenkritzel 30a an. Ueber ein Umlenkgetriebe 26 wird eine Kardanwelle 19 angetrieben, welche zum Einzugsbereich des Transportkanals 8 führt. Mit Hilfe der Kardanwelle 19 werden über nicht näher dargestellte weitere Umlenkgetriebe die Schnecke 15, die Eintaktkette 16 und das Zuführband 27 angetrieben. Die Antriebskettenräder der Eintaktkette 16 und des Zuführbandes 27 sind auf einer gemeinsamen Antriebswelle 41 angeordnet, wie aus Figur 3 ersichtlich ist. Auch das synchron laufende Düsenrad 22 kann beispielsweise mit einem Zahnriemen oder mit einer Kette von der gleichen Antriebswelle 4l angetrieben werden.

An den Umlenkritzeln 30 sind automatische Kettenspanner 23 angeordnet, so dass die beiden parallel laufenden Bandketten 2 und 2' immer einer vorbestimmbaren Spannung ausgesetzt sind.

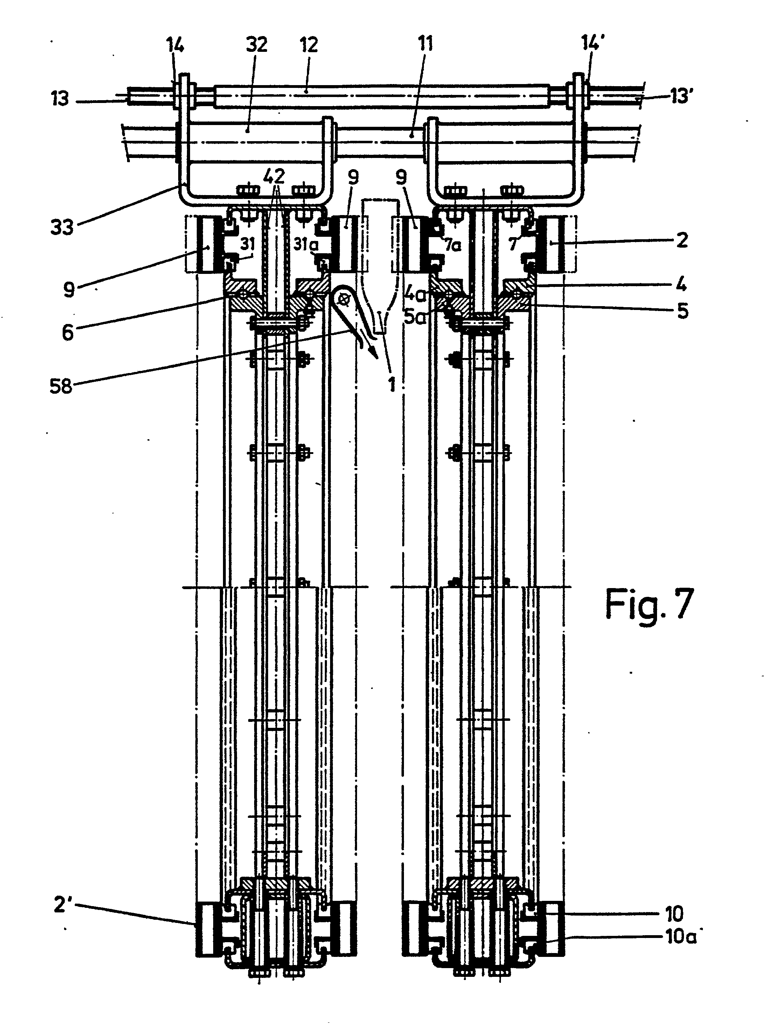

Einzelheiten der Umlenkvorrichtung und der Verstellbarkeit der beiden den Transportkanal 8 bildenden Bandketten werden nachstehend anhand der Figuren 6 und 7 erläutert. Die Umlenkvorrichtung 3 und 3' der einzelnen Bandketten 2 und 2' besteht im wesentlichen aus zwei parallel verlaufenden Drehkränzen 4 und 4a. Diese Drehkränze sind mittels Wälzkörpern 6 auf feststehenden und etwa kreisringförmigen Lagerkränzen 5 und 5a drehbeweglich gelagert. Die Drehkränze 4, 4a sind im Querschnitt flanschartig ausgebildet und tragen an ihrem äusseren Rand einen Führungsring 3l bzw. 3la, der vorzugsweise aus Kunststoffmaterial gefertigt ist. Der Querschnitt der Bandketten ist derart ausgebildet, dass die Bandketten auf diesem Führungsring 3l reibschlüssig gehalten werden.

Im Bereich der Umlenkung und im Abstand zum Drehkranz 4 bzw. 4a ist eine konzentrisch verlaufende Führungsschiene 7 bzw. 7a angeordnet, welche den gleichen Querschnitt aufweist wie der Führungsring 3l. Auch in diese Führungsschienen 7, 7a greifen die Bandketten ein, so dass dieselben auf beiden Seiten geführt sind. An den gestreckten Abschnitten der Bandketten sind ebenfalls gerade Führungsschienen l0 angeordnet, welche jede Bandkette auf beiden Seiten führen.

Die feststehenden Lagerkränze 5 und 5a, die gekrümmten Führungsschienen 7, 7a sowie die geraden Führungsschienen l0, l0a sind über Stützbleche 42 fest miteinander verbunden und bilden so eine verwindungssteife Kettenführungs-Einheit. Jede Kettenführungs-Einheit ist mit Hilfe von Haltegabeln 33 an Gleithülsen 32 befestigt.

Die beiden einander gegenüberliegenden Kettenführungs-Einheiten können auf gemeinsamen Führungswellen ll, welche durch die Gleithülsen 32 hindurchgeführt sind, planparallel zueinander verschoben werden. Da sich die Behälterachsen immer genau in der Wirkebene der Ausspritzvorrichtung bewegen müssen, hat die Verstellung der Klemmdistanz im Transportkanal symmetrisch zu erfolgen. Dies wird mit Hilfe von Spindelwellen l2 erreicht, welche parallel zu den Führungswellen ll angeordnet sind. Jede Spindelwelle l2 hat relativ zueinander gegenläufige Spindelabschnitte l3 und l3'. Diese Spindelabschnitte greifen in Gewindemuttern l4 und l4', welche fest mit den Haltegabeln 33 verbunden sind. Werden nun die Spindelwellen l2 gedreht, so bewegen sich je nach Drehrichtung die beiden Kettenführungs-Einheiten symmetrisch aufeinander zu oder voneinander weg, so dass die Klemmbreite des Tranportkanals dem Flaschendurchmesser angepasst werden kann. In Figur l sind beispielsweise ein paar Führungswellen ll und Spindelwellen l2 dargestellt. Eine der Spindelwellen kann mit einem Handrad 29 versehen sein. Alle übrigen Spindelwellen können von der mit dem Handrad versehenen Spindelwelle mit Hilfe einer Kette oder eines Zahnriemens angetrieben werden.

Einzelheiten der Bandkette 2 und der darauf angeordneten Mitnehmerelemente 9 aus Gummi oder Kunststoffmaterial können den Figuren l0 und ll entnommen werden. Die Bandketten sind vorzugsweise Plattenbandketten, auf deren einzelnen Platten 43 je ein Mitnehmerelement 9 aus Kunststoffmaterial angeordnet ist. Das Mitnehmerelement hat wie dargestellt eine etwa röhrenförmige Konfiguration, so dass parallel zur Achse der Flaschen besonders gute Federeigenschaften gewährleistet sind. Das Mitnehmerelement kann je nach Bahälterform aber auch andere geeignete Formen aufweisen. Je zwei einander gegenüberliegende Mitnehmerelemente 9 ergreifen im Transportkanal 8 eine Flasche und klemmen sie in einer genau positionierten Lage ein. Die Unterseiten der Einzelplatten 43 sind mit einem Hutprofil 44 versehen, welches in die geraden Führungsschienen l0, bzw. in die gekrümmten Führungsschienen 7 und in den Führungsring 3l an einer Umlenkvorrichtung eingreift. Jede Bandkette ist dadurch praktisch über den gesamten Laufbereich in ihrer Ebene stabilisiert.

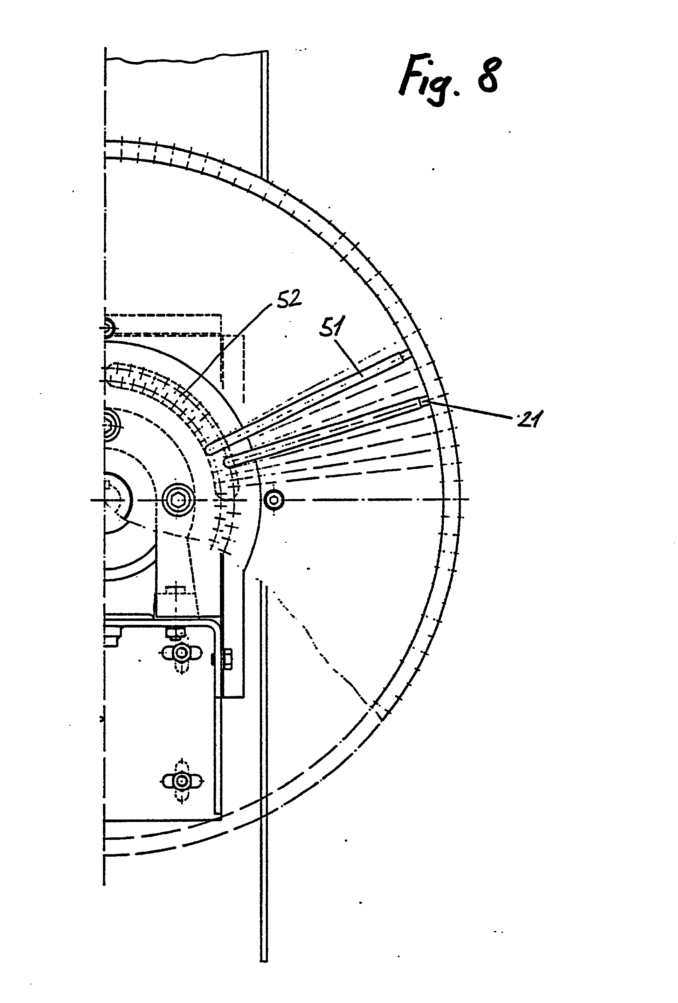

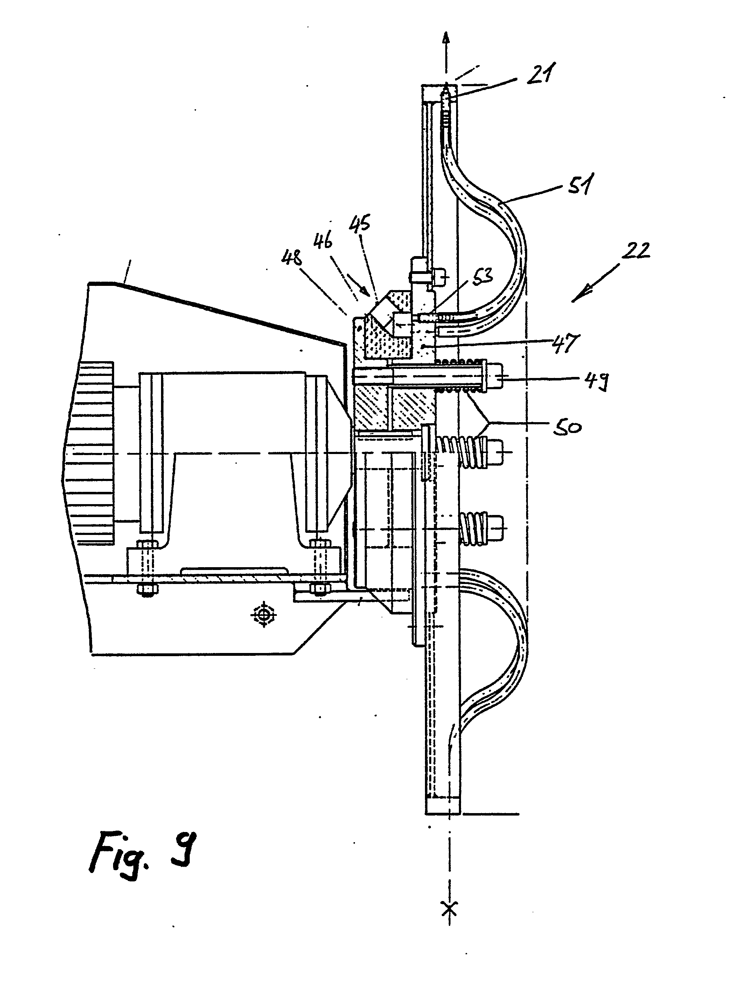

In den Figuren 8 und 9 ist ein Düsenrad 22 dargestellt. Dieses besteht im wesentlichen aus einer rotierenden Düsenscheibe 47, an der in regelmässiger Teilung am Umfangsbereich mehrere Düsen 2l angeordnet sind. Die Düsenscheibe 47 dreht sich auf einer feststehenden Steuerscheibe 46, an welcher ein Anschlussstutzen 45 für die Wasserzufuhr angeordnet ist. Eine Gegenscheibe 48 ist mittels Gewindebolzen 49 kraftschlüssig mit der Düsenscheibe 47 verbunden. Mit Hilfe von Druckfedern 50 an den Gewindebolzen 49 wird die Düsenscheibe 47 gegen die Gegenscheibe 48 gepresst, so dass die Düsenscheibe 47 dichtend gegen die Steuerscheibe 46 anliegt.

Der Anschlussstutzen 45 an der Steuerscheibe 46 mündet in einen Steuerschlitz 52, der sich über einen bestimmten Sektor erstrecken kann. Sobald die Düsenanschlüsse 43 im Verlaufe einer Umdrehung den Steuerschlitz 52 erreichen, fliesst Wasser aus dem Steuerschlitz durch die Düsenanschlüsse 53 über die Schläuche 4l in die Düsen 2l. Ausserhalb des steuerschlitzes 52 ist die Wasserzufuhr unterbrochen, so dass aus den Düsen 2l nur in einem gewünschten Sektor Wasser ausgespritzt wird. Das Düsenrad 22 kann wie bereits erwähnt über andere Antriebsaggregate an der Vorrichtung oder aber auch über einen separaten Motor angetrieben werden. Insbesondere bei einem Asynchron-Betrieb wird das Düsenrad über einen separaten Motor angetrieben werden, dessen Drehzahl beliebig eingestellt werden kann, so dass gegenüber den Flaschen im Transportkanal ein Vorlauf oder eine Verzögerung eintritt.

Der Vorteil dieser Ausspritzvorrichtung besteht nicht zuletzt auch darin, dass an der gleichen Vorrichtung entweder ein einfaches feststehendes Düsensegment oder wahlweise ein asynchron oder ein synchron laufendes Düsenrad montiert werden kann. Auf diese Weise können bestehende Vorrichtungen später je nach Bedarf umgebaut werden. Das synchron laufende Düsenrad stellt dabei die Ideallösung dar, mit der hohe Einsparungen am Brauchwasser erzielt werden können.

Selbstverständlich muss die Ausspritzvorrichtung nicht notwendigerweise mit Wasser betrieben werden. Je nach Anwendungsfall kann die Ausspritzvorrichtung auch mit anderen Flüssigkeiten oder gar mit bestimmten Gasen gespeist werden.

**Patentansprüche**

1. Vorrichtung zum Fördern von Gegenständen (1), insbesondere Flaschen, mit zwei endlosen Bandketten (2, 2'), welche derart parallel zueinander angeordnet sind, dass ihre gleichsinnig laufenden Abschnitte einen Transportkanal (8) bilden, wobei die Bandketten im Transportkanal einander gegenüberliegende Mitnehmerelemente (9) zum klemmenden Erfassen der Gegenstände (1) aufweisen, und wobei vor dem Einzugsbereich des Transportkanals eine rotierende Schnecke (15) zum Vereinzeln der in Reihe zugeführten Gegenstände (1) angeordnet ist, dadurch gekennzeichnet, dass zwischen der Schnecke (15) und dem Einzugsbereich des Transportkanals eine mit Führungsfingern (17) versehene Eintaktkette (16) angeordnet ist, dass die Eintaktkette synchron mit der Schnecke antreibbar ist und derart geführt ist, dass ihre Führungsfinger in den durch die Schnecke vorgegebenen Bahnverlauf zwischen je zwei Behälter eingreifen, wobei die Gegenstände mit den Führungsfingern von der Schnecke abnehmbar und geführt dem Einzugsbereich zuführbar sind.

2. Vorrichtung nach Anspruch 1, dadurch gekennzeichnet, dass zwischen der Schnecke und dem Einzugsbereich des Transportkanals ein Zuführband (27) für den Weitertransport der Gegenstände angeordnet ist, wobei das Zuführband derart schneller als die Eintaktkette (16) antreibbar ist, dass die Gegenstände nach dem Verlassen der Schnecke auf die Führungsfinger auflaufen.

3. Vorrichtung nach Anspruch 1 oder 2, dadurch gekennzeichnet, dass die Eintaktkette einen ersten Abschnitt aufweist, der schräg zur Achse der Schnecke gespannt ist, während ein zweiter Abschnitt parallel zur Achse der Schnecke angeordnet ist.

4. Vorrichtung nach einem der Ansprüche 1 bis 3, dadurch gekennzeichnet, dass die Bandketten, die Schnecke und die Eintaktkette mit der gleichen Antriebsvorrichtung synchron antreibbar sind.

5. Vorrichtung nach einem der Ansprüche 1 bis 4, dadurch gekennzeichnet, dass die Bandketten für die Ueberkopfführung der Gegenstände auf Drehkranzpaaren umgelenkt werden, wobei der eine Drehkranz den den Transportkanal bildenden Abschnitt und der andere Drehkranz den rücklaufenden Abschnitt der Bandkette trägt.

6. Vorrichtung nach Anspruch 5, dadurch gekennzeichnet, dass jeder Drehkranz (4) mittels Wälzkörpern (6) auf einem kreisringförmigen Lagerkranz (5) gelagert ist.

7. Vorrichtung nach einem der Ansprüche 5 oder 6, dadurch gekennzeichnet, dass jede Bandkette an ihren geraden Abschnitten in Führungsschienen (10) seitlich geführt ist, die zusammen mit den Drehkranzpaaren eine Kettenführungseinheit bilden.

8. Vorrichtung nach Anspruch 7, dadurch gekennzeichnet, dass die Distanz zwischen den Kettenführungseinheiten der beiden den Transportkanal (8) bildenden Bandketten (2, 2') mit einer Einstellvorrichtung symmetrisch zur Bahnmitte des Transportkanals verstellbar ist.

9. Vorrichtung nach Anspruch 8, dadurch gekennzeichnet, dass die einander gegenüberliegenden Kettenführungseinheiten auf gemeinsamen Führungswellen (11) gelagert sind.

10. Vorrichtung nach Anspruch 8 und 9, dadurch gekennzeichnet, dass die Einstellvorrichtung mehrere gemeinsam antreibbare und parallel zu den Führungswellen (11) angeordnete Spindelwellen (12) mit gegenläufigen Spindelabschnitten (13, 13') aufweist, und dass auf jedem Spindelabschnitt eine Gewindemutter (14) angeordnet ist, die mit einer Kettenführungseinheit verbunden ist.

11. Vorrichtung nach einem der Ansprüche 5 bis 10, dadurch gekennzeichnet, dass im Bereich der Umlenkachse eines Drehkranzpaares eine mit mehreren Düsen versehene Ausspritzvorrichtung (20) angeordnet ist, wobei die Düsen gegen den Transportkanal gerichtet sind.

12. Vorrichtung nach Anspruch 11, dadurch gekennzeichnet, dass die Ausspritzvorrichtung (20) ein Düsenrad ist, an dessen Umfang in regelmässiger Teilung Düsen angeordnet sind und welches synchron oder asynchron zu den Bandketten (2, 2') antreibbar ist.

**Claims**

1. Apparatus for conveying articles (1), in particular bottles, comprising two endless band chains (2, 2') which are arranged parallel to each other in such a way that their portions which move in the same direction form a transport passage (8), wherein the band chains have entrainment elements (9) which are disposed in mutually opposite relationship in the transport passage for clampingly engaging the articles (1), and wherein arranged upstream of the take-in region of the transport passage is a rotary screw (15) for separating off the articles (1) which are supplied in a row, characterised in that arranged between the screw (15) and the take-in region of the transport passage is a feed timing chain (16) provided with guide fingers (17), that the feed timing chain is drivable synchronously with the screw and is guided in such a way that the guide fingers thereof engage into the path of movement which is predetermined by the screw, between each two containers, wherein the articles can be removed from the screw with the guide fingers and can be fed to the take-in region in a guided condition.

2. Apparatus according to claim 1 characterised in that disposed between the screw and the take-in region of the transport passage is a feed belt (27) for further transportation of the articles, wherein the feed belt is drivable faster than the feed timing chain (16) in such a way that, after leaving the screw, the articles pass on to the guide fingers.

3. Apparatus according to claim 1 or claim 2 characterised in that the feed timing chain has a first portion which is tensioned inclinedly with respect to the axis of the screw while a second portion is arranged parallel to the axis of the screw.

4. Apparatus according to one of claims 1 to 3 characterised in that the band chains, the screw and the feed timing chain are drivable synchronously by the same drive device.

5. Apparatus according to one of claims 1 to 4 characterised in that the band chains undergo a change in direction for guiding the articles overhead on pairs of rotary rings, wherein the one rotary ring carries the portion forming the transport passage and the other rotary ring carries the returning portion of the band chain.

6. Apparatus according to claim 5 characterised in that each rotary ring (4) is mounted by means of rolling members (6) on an annular mounting ring (5).

7. Apparatus according to one of claims 5 and 6 characterised in that at its straight portions each band chain is laterally guided in guide rails (10) which together with the pairs of rotary rings form a chain guide unit.

8. Apparatus according to claim 7 characterised in that the distance between the chain guide units of the two band chains (2, 2') forming the transport passage (8) is adjustable symmetrically with respect to the middle of the path of the transport passage, by an adjusting means.

9. Apparatus according to claim 8 characterised in that the mutually oppositely disposed chain guide units are mounted on common guide shafts (11).

10. Apparatus according to claim 8 and claim 9 characterised in that the adjusting means has a plurality of jointly drivable spindle shafts (12) which are arranged parallel to the guide shafts (11), the spindle shafts (12) having oppositely directed spindle portions (13, 13'), and that arranged on each spindle portion is a screwthreaded nut (14) connected to a chain guide unit.

11. Apparatus according to one of claims 5 to 10 characterised in that a spray device (20) provided with a plurality of nozzles is arranged in the region of the axis of the change in direction of a pair of rotary rings, the nozzles being directed towards the transport passage.

12. Apparatus according to claim 11 characterised in that the spray device (20) is a nozzle wheel, at the periphery of which nozzles are arranged at a uniform pitch, and which is drivable synchronously or asynchronously with respect to the band chains (2, 2').

**Revendications**

1. Dispositif pour acheminer des objets, notamment des bouteilles, comportant deux chaînes transporteuses sans fin (2, 2') disposées parallèlement entre elles, de sorte que leurs tronçons qui circulent dans le même sens définissent un canal de transport (8), les chaînes transporteuses possédant des éléments poussoirs (9) situés les uns en face des autres dans le canal de transport, pour saisir les objets (1) en les serrant, tandis qu'en amont de la zone d'introduction du canal de transport, il est prévu une vis sans fin rotative (15) destinée à séparer individuellement les objets (1) amenés en rang, caractérisé en ce qu'entre la vis sans fin (15) et la zone d'introduction du canal de transport, il est prévu une chaîne de cadencement (16) pourvue de doigts de guidage (17), et en ce que la chaîne de cadencement peut être actionnée d'une manière synchrone avec la vis sans fin et est guidée de telle façon que ses doigts de guidage s'avancent respectivement dans la trajectoire prédéterminée par la vis sans fin entre deux récipients, moyennant quoi, les objets peuvent être retirés de la vis sans fin et amenés à la zone d'introduction en étant guidés à l'aide des doigts de guidage.

2. Dispositif selon la revendication 1, caractérisé en ce qu'entre la vis sans fin et la zone d'introduction du canal de transport, il est prévu un transporteur d'amenée (27) pour continuer à transporter les objets, le transporteur d'amenée pouvant être actionné à une vitesse supérieure à celle de la chaîne de cadencement (16), de façon qu'après avoir quitté la vis sans fin, les objets viennent buter contre les doigts de guidage.

3. Dispositif selon la revendication 1 ou 2, caractérisé en ce que la chaîne de cadencement comporte un premier tronçon tendu en biais par rapport à l'axe de la vis sans fin, tandis qu'un second tronçon est disposé parallèlement à l'axe de la vis sans fin.

4. Dispositif selon l'une des revendications 1 à 3, caractérisé en ce que les chaînes transporteuses, la vis sans fin et la chaîne de cadencement peuvent être actionnées d'une manière synchrone au moyen du même dispositif de commande.

5. Dispositif selon l'une des revendications 1 à 4, caractérisé en ce que les chaînes transporteuses destinées à guider les objets au-dessus de la tête, ont leur direction inversée sur des paires de couronnes de rotation, l'une des couronnes de rotation portant le tronçon qui définit le canal de transport, tandis que l'autre porte le tronçon de retour de la chaîne transporteuse.

6. Dispositif selon la revendication 5, caractérisé en ce que chaque couronne de rotation (4) est montée sur une couronne d'appui de forme annulaire (5) au moyen d'organes de roulement (6).

7. Dispositif selon la revendication 5 ou 6, caractérisé en ce que chacune des chaînes transporteuses est, au niveau de ses tronçons rectilignes, guidée latéralement dans des rails de guidage (10) qui, conjointement avec les paires de couronnes de rotation, forment une unité de guidage de chaîne.

8. Dispositif selon la revendication 7, caractérisé en ce que la distance qui sépare les unités de guidage de chaîne des deux chaînes transporteuses (2, 2') définissant le canal de transport (8), peut être ajustée d'une manière symétrique par rapport à la trajectoire médiane du canal de transport, à l'aide d'un dispositif de réglage.

9. Dispositif selon la revendication 8, caractérisé en ce que les unités de guidage de chaîne situées l'une en face de l'autre, sont montées sur des arbres de guidage (11) communs.

10. Dispositif selon les revendications 8 et 9, caractérisé en ce que le dispositif de réglage comporte plusieurs axes de broches (12) munis de tronçons de broches opposés (13, 13'), lesquels axes de bro-

ches (12) peuvent être actionnés en commun et sont disposés parallèlement aux arbres de guidage (11), et en ce qu'il est prévu, sur chaque tronçon de broche, un écrou taraudé (14) relié à une unité de guidage de chaîne.

11. Dispositif selon l'une des revendications 5 à 10, caractérisé en ce que, dans la zone de l'axe de renvoi d'une paire de couronnes de rotation, il est prévu un dispositif de pulvérisation (20) pourvu de plusieurs injecteurs, les injecteurs étant dirigés vers le canal de transport.

12. Dispositif selon la revendication 11, caractérisé en ce que le dispositif de pulvérisation (20) est une roue à injecteurs sur le pourtour de laquelle des injecteurs sont répartis à intervalles réguliers, et qui est apte à être actionnée d'une manière synchrone ou asynchrone par rapport aux chaînes transporteuses (2, 2').

Fig.1

EP 0 227 599 B1

Fig. 2

Fig. 3

Fig. 4

Fig. 5

Fig.6

Fig. 7

Fig. 8

Fig. 9

# Fig. 10

# Fig. 11

Fig. 12

EP 0 227 599 B1